(19) Europäisches Patentamt
European Patent Office
Office européen des brevets

(11) Publication number: **0 169 826**
**B1**

(12) **EUROPEAN PATENT SPECIFICATION**

(45) Date of publication of patent specification: **15.02.89**

(51) Int. Cl.⁴: **C 08 G 2/14,** C 08 G 2/30, C 11 D 3/37, C 11 D 3/00

(21) Application number: **85870095.8**

(22) Date of filing: **01.07.85**

(54) **Polymeric acetal carboxylate compositions.**

(30) Priority: **02.07.84 US 627262**
**02.07.84 US 627261**

(43) Date of publication of application:
**29.01.86 Bulletin 86/05**

(45) Publication of the grant of the patent:
**15.02.89 Bulletin 89/07**

(84) Designated Contracting States:
**BE CH DE FR GB IT LI LU NL SE**

(56) References cited:
**GB-A-1 010 092**
**US-A-4 315 092**

(73) Proprietor: **Monsanto Company**
**Patent Department 800 North Lindbergh Boulevard**
**St. Louis Missouri 63167-7020 (US)**

(72) Inventor: **Chou, Yueting**
**315 Branchport Drive**
**Chesterfield Missouri 63017 (US)**
Inventor: **Dyroff, David Ray**
**15 Woodoaks Trail**
**Ladue Missouri 63124 (US)**

(74) Representative: **Lunt, John Cooper et al**
**Monsanto Europe S.A. Patent Department**
**Avenue de Tervuren 270-272 Letter Box No 1**
**B-1150 Brussels (BE)**

**EP 0 169 826 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invention relates to polymeric acetal carboxylate compositions useful as complexing agents and detergency builders. More particularly, it relates to said polymers in intimate admixture with a basic additive to provide compositions which are resistant to degradation of the polymer's sequestration properties during storage under warm climate conditions.

BACKGROUND OF THE INVENTION

The property possessed by some materials of improving detergency levels of soaps and synthetic detergents and the use of such materials in detergent compositions is known. Such cleaning boosters are called builders and such builders permit the attainment of better cleaning performance than is possible when so-called unbuilt compositions are used. The behaviour and mechanisms by which builders perform their function are only partially understood. It is known that good builders must be able to sequester most of the calcium and/or magnesium ions in the wash water since these ions are detrimental to the detergency process. However, it is difficult to predict which class of compounds possess useful combinations of builder properties and which compounds do not because of the complex nature of detergency and the countless factors which contribute both to overall performance results and requirements of environmental acceptability.

Sodium tripolyphosphate (STPP) has been found to be a highly efficient cleaning and detergency builder and this compound has been widely used for decades in cleaning formulations. Indeed, millions of pounds of STPP are used each year in cleaning formulations because of its superior builder qualities. However, because of the recent emphasis on removing phosphates from detergent and cleaning compositions for environmental reasons, the detergent and cleaning industry is now looking for materials suitable for use as builders which do not contain phosphorus and which are environmentally acceptable.

Polymeric acetal carboxylates are suitable as a replacement for STPP in detergent compositions. The preparation of such polymeric acetal carboxylates has been disclosed in US—A—4,144,226 issued March 13, 1979 and in US—A—4,204,052 issued May 20, 1980. The use of such polymeric acetal carboxylates in detergent compositions is disclosed in US—A—4,146,495 issued March 27, 1979. An improved method for the saponification of the esters of the polymeric acetal carboxylates to form the corresponding alkali metal salts is disclosed in US—A—4,140,676 issued Feburary 20, 1979. An improved method of stabilizing the polymer against rapid depolymerization in alkaline solution by adding an alkyl vinyl ether in the presence of an organo aluminum compound is disclosed in US—A—4,225,685 issued September 30, 1980. The polymeric acetal carboxylate salts described in the above patents were tested for sequestration function using procedures described by Matzner et al in "Organic Builder Salts as Replacements for Sodium Tripolyphosphate", TENSIDE, 10, No. 3 pages 119-125 (1973). As a result of such tests, polymeric acetal carboxylate salts were found to be superior detergent builders compared to STPP, and were stable under laundry use conditions but depolymerized at lower pH making the polymers more readily biodegradable.

Although the polymeric acetal carboxylates disclosed in the above patents are excellent sesquestering agents and builders, it has now been found that these polymeric acetal carboxylates are subject to degradation of their sequestering capacity upon prolonged storage at elevated temperatures such as found in shipping and warehousing conditions in warm climates. It has now been found that solid compositions comprising polymeric acetal carboxylates in intimate admixture with a basic additive are resistant to degradation and retain their sequestering capacity much longer under such storage conditions.

SUMMARY OF THE INVENTION

In accordance with the invention, solid phase compositions of polymeric acetal carboxylates having improved storage stability are provided which comprise a polymeric acetal carboxylate in intimate admixture with a stabilizing amount of a basic additive, said intimate admixture having been obtained by a process in which an effective amount of basic additive is mixed with a polymeric acetal carboxylate under conditions in which at least one of the components is in the form of a solution or slurry and recovering the admixture in solid form.

In another embodiment of this invention such intimate admixtures are prepared by reacting an aqueous solution or slurry of the polymer and alkali metal hydroxide with carbon dioxide. This process is particularly advantageous in conjunction with the process of manufacturing the polymer by saponification of a polymeric ester precursor with excess alkali metal hydroxide. In this manner, at least some of the excess alkali metal hydroxide is converted to alkali metal carbonate which forms an intimate admixture with the polymer. Such admixtures can be readily recovered in solid form and are resistant to degradation during storage.

The compositions of this invention are resistant to degradation of the polymeric acetal carboxylate at elevated temperatures encountered in shipping and storage of the polymeric acetal carboxylate when exposed in concentrated form as a sequestering agent or detergency builder as well as in the form of finished formulations such as built detergents containing the polymeric acetal carboxylate builders and surfactants.

## DETAILED DESCRIPTION OF THE INVENTION

The polymeric acetal carboxylate compound has the following empirical formula:

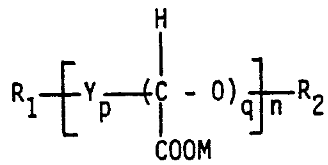

wherein Y is one or more comonomers randomly distributed in the polymer; n averages at least 4; p is O to an average of about 5; q is at least 1; $R_1$ and $R_2$ are individually any chemically stable group which stabilizes the polymer against rapid depolymerization in alkaline solution (as hereinafter defined); and M is selected from alkali metal, ammonium, tetralkyl ammonium and alkanol ammonium groups having from 1 to 4 carbon atoms in the alkyl chain.

The preparation and builder properties of these polymeric acetal carboxylates are described in US—A—4,144,226 issued March 13, 1979 to Crutchfield et al and US—A—4,246,495 issued March 27, 1979 to Crutchfield et al.

These polymeric acetal carboxylates can be prepared by bringing together in a reaction zone under polymerization conditions an ester of glyoxylic acid optionally one or more comonomers and a polymerization initiator to form a polymer represented by the empirical formula:

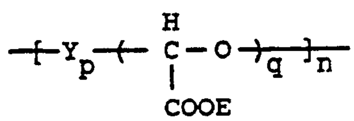

wherein E is an alkyl group having 1 to about 4 carbon atoms and Y, p, q and n are as defined above. The resulting polymer is then reacted at its termini with a reagent which produces a chemically stable end group, $R_1$ and $R_2$, to stabilize the polymer against rapid depolymerization in alkaline solution. The term "rapid depolymerization in alkaline solution", as used herein, means that in an aqueous solution of 0.5 molar sodium hydroxide containing 10 grams per litre of polymeric acetal carboxylate, the average chain length of the polymer will be reduced by more than 50 percent, as determined by Proton Magnetic Resonance, after 1 hour at 20°C. The polymer is then reacted with base such as lithium hydroxide, sodium hydroxide, potassium hydroxide, and the like to make a salt suitable for use as a builder and as a sequestrant.

A preferred method of stabilizing the polymer against rapid depolymerization in alkaline solution by adding an alkyl vinyl ether in the presence of an organo-aluminum compound is described in US—A—4,225,685 issued September 30, 1980 to Dyroff et al, incorporated herein by reference.

Any number of basic compounds can be used as additives to produce polymeric acetal carboxylate compositions having improved stability in accordance with the present invention. It is preferred that the basic additive be appreciably soluble in water in order to achieve sufficiently intimate mixing with the polymer in an aqueous solution or slurry. The basic additive should have sufficiently high basicity and buffering power to effectively maintain the pH of the polymer admixture (measured as 0.6% aqueous solution) within the range 9.5 to 11.0. It is preferred that the additive have limited solubility in lower alkanol/water mixtures, derived from the saponification of the ester precursor of the polymer, so that the polymer and additive can be efficiently coprecipitated from an aqueous medium in the presence of a sufficient amount of the alkanol. Methanol/water mixtures are particularly preferred since the use of methanol is highly advantageous for recovering the product in the process of producing the polyacetal carboxylate polymer from the preferred methyl ester precursor.

Examples of suitable additives include alkali metal carbonates, alkali metal orthophosphates, alkali metal polyphosphates, alkali metal silicates and alkali metal borates, including mixtures thereof. Alkali metal carbonates are preferred and sodium carbonate is especially preferred in view of its low cost and appropriate basicity and solubility characteristics. Alkali metal hydroxides are not suitable in most cases because they result in excessively high product basicity at effective levels. Furthermore, if the product is precipitated from a methanol/water solution or the like, an excessive fraction of the alkali metal hydroxide remains in solution in the liquid phase instead of coprecipitating with the product.

The amount of the basic additive employed to form an intimate admixture with polymeric acetal carboxylates can vary widely with good results and the minimum effective level can be determined for any selected additive by routine experimentation in view of the present description. In the case of sodium carbonate the preferred range is about 1 to 15% by weight based on the weight of the admixture, and the range of 3 to 5% is especially preferred.

The method by wich the polymer and the basic additive are mixed can vary widely with good results provided that a sufficient intimate degree of mixing is achieved. Wet mixing is generally effective if one or both of the components have sufficient solubility in the liquid vehicle. Water and aqueous solutions of organic solvents are preferred as the liquid vehicle for mixing the polymer and basic additive. Adequate

mixing can be accomplished in a liquid vehicle which totally dissolves the additive and the polymer or in a liquid vehicle which only partially dissolves one or both of the components to form a slurry.

Effective mixing can occur over a wide range of temperatures, mixing times, liquid vehicle composition, orders of addition, degree of agitation, continuous or batch mode of operation, etc. The degree of effectiveness of any particular combination of such parameters can easily be determined by routine experimentation. It is preferred that the pH of the liquid vehicle during mixing be maintained above about 9.5, more preferably above about 10.0. There is no particular advantage in the employment of extremely high pH such as above 11.0, however, such pH when required for other purposes such as saponification of the ester precursor of the polymer is not detrimental in the preparation of the intimate admixture with the basic additive. For example, the basic additive can be effectively introduced by mixing it with the aqueous base used for saponification of the ester precursor.

Once the polymer and the basic additive have been sufficiently admixed, any number of means of converting this mixture to a final solid product can be employed. Where the mixing process has resulted in a homogeneous solution, this solution can be dried via evaporation, it can be added to another material such as methanol to precipitate the contained solids or a material such as methanol can be added to it to produce a precipitate. Where a slurry has been employed to produce the admixture, it may be cooled or further mixed with additional material such as methanol to reduce the solubility of either the polymer or the basic additive to an acceptable level. Once the solubility of each solid in the slurry has been sufficiently reduced, the solids can be separated by and conventional process such filtration, settling, centrifugation, etc. The resulting moist solids can be washed if desired and dried by any number of methods such as flash-drying, tray drying in an oven or at ambient temperature, rotary drying, etc. The dried solids can be crushed, screened, milled, etc. Such finishing procedures can be used without destroying the stabilizing effect of the basic additive, provided that the polymer and additive remain intimately mixed and the mixture is not subjected to excessive acidic conditions.

In all finishing steps, it is important to avoid excessive acidification of the product. Thus, if recovered solids are washed, it is preferable to employ a wash solution which is sufficiently basic to preserve a solid pH of at least 9.5, preferably 10-11 even at the surface of the solids. Of course, such wash solution must be selected to avoid excessive dissolution and loss of the basic additive. Examples of suitable wash solutions include methanol containing 0.4% by weight of 50% aqueous NaOH, methanol saturated with sodium carbonate, and the like. In drying, excessive contact with acidic combustion gases should be avoided. The tolerable degree of contact with any particular acidic gas mixture during drying can be determined by routine experimentation.

During drying of the admixture product, excessive exposure to high temperatures should be avoided since product degradation can result. Appropriate time and temperature limits for any given method of drying can be determined by routine experimentation. The degree of dryness of the final product can be varied widely. Excessive drying tends to produce a hygroscopic product, while insufficient drying tends to produce a sticky product. A preferred range for final percent volatiles of the solid product is about 8-14% by weight.

The pH of a 0.6% solution of the compositions of this invention can vary over an alkaline range of pH. The preferred pH range is about 9.5 to 11.0 and the range of 10.0 to 10.8 is particularly preferred.

Conditions of preparation of the polymeric acetal carboxylate component of the improved compositions of this invention can vary widely and many of the resulting variations in the polymer can affect its properties. Examples of such variations are different terminal structures at the polymer chain ends, different chain length distributions, different degrees of dryness, different degrees of homogeneity, different contents of various by-products or impurities, different degrees of basicity, different salts of the polymer, etc. While such variations will affect both the storage stability of the polymeric acetal carboxylate and the degree of improvement obtained by using a baic additive in accordance with this invention, in each case the stability of the intimate admixture will be enhanced due to the presence of the basic additive. Polymer component characteristics which result in relatively high hydrolytic stability at a high pH as well as a sufficiently high rate of hydrolysis in waste water at lower pH to satisfy environmental concerns under use conditions are preferred.

In preferred compositions, the polymeric acetal carboxylates are polymers wherein q in the above formula is 1 and polyacetal carboxylate segments represented by the structure

$$-\!\!\left(\underset{\displaystyle COOM}{\underset{|}{CHO}}\right)\!\!-_{n}$$

constitute at least 50% by weight of the total polymer.

Further features of preferred polyacetal carboxylates and that n averages in the range 20 to 200, for example from 50 to 150; M is sodium or potassium; and at least one of $R_1$, and $R_2$, is derived from ethyl vinyl ether.

The polymeric acetal carboxylate admixtures of this invention are particularly useful as detergency builders in detergent formulations such as described in US—A—4,146,495 issued March 27, 1979 to Crutchfield et al, and CA—A—1,148,831 issued June 28, 1983, to Rodriguez et al.

PREFERRED PROCESS

There was pointed out above that the preparation and properties of the builder are known and described in earlier U.S. patents to Crutchfield et al. US—A—4,140,676, there is described a method of preparing the builder which is advantageously employed in the preferred method of this invention. The method of saponifying the polymeric acetal carboxylate ester to its alkali metal salt, as described in U.S.—A—4,140,676 bring together in a reaction zone the polymeric ester and an excess, for example about 10 molar percent excess over the required stoichiometric amount, of at least 5 normal alkali metal hydroxide.

In the preferred process of this invention, storage stable compositions are prepared by reacting an aqueous solution or slurry fo the polymeric acetal carboxylate containing excess alkali metal hydroxide with carbon dioxide to form alkali metal carbonate in intimate admixture with the polymer and recovering the admixture in solid form.

Alkali metal hydroxides useful in accordance with this preferred embodiment of this invention are, for example, lithium, sodium or potassium hydroxides, sodium and potassium hydroxides are preferred. Particularly preferred is sodium hydroxide. Although the alkali metal of the hydroxide and the polymer can be different, it is preferred that they are the same.

The reaction of carbon dioxide to form alkali metal carbonate can be conducted under various conditions. Effective reaction can occur over a wide range of temperature, pressure, alkaline pH, liquid vehicle composition, and the degree of effectiveness of any combination of such parameters can be readily determined by routine experimentation in view of the present description. Temperatures in the range of about 0°C, or lower, to 100°C can be employed. Preferably, the reaction is conducted in the range of about 20°C to about 75°C.

The reaction can be conducted at atmospheric, sub-atmospheric or super atmospheric pressures. Good results are obtained at ambient pressures which are preferred for convenience.

It is preferred that the pH of the reaction mixture be maintained above about 9.5, more preferably above about 10.0. In a particularly preferred embodiment of this invention, the carbon dioxide is reacted with the reaction mixture obtained after saponification of the ester precursor of the polymer with an excess of sodium hydroxide, and the amount of gaseous carbon dioxide reacted with said mixture is sufficient to provide an intimate admixture of alkali metal carbonate and polymer containing at least 1%, more preferably at least 3%, by weight alkali metal carbonate while maintaining the pH of the reaction mixture greater than about 9.5.

The liquid vehicle in which carbon dioxide is reacted with alkali metal hydroxide can be water or a water/solvent mixture. A water/lower alkanol mixture is preferred, particularly a water/methanol mixture. Suitable water/methanol mixtures are formed in the saponification of the methyl ester precursor of the polymer with excess aqueous alkali metal hydroxide, and such a reaction mixture is particularly suitable for preparing storage stable polymeric acetal carboxylates in accordance with this invention. The addition of methanol to the reaction mixture after reacting with carbon dioxide is advantageous to fully precipitate the intimate admixture prior to recovering it in solid form.

The amount of the alkali metal hydroxide employed in the practice of this preferred process can vary widely provided that a sufficient amount is present to react with the carbon dioxide to form alkali metal carbonate in intimate admixture, preferably at least 1%, more preferably at least 3%, by weight and the pH of the reaction mixture is maintained above about 9.5. Greater amounts of alkali metal carbonate are not detrimental to the improved storage stability of the resulting product and amounts of 15% by weight, or more, alkali metal carbonate can be used.

In the most preferred embodiment of this invention, the amount of the alkali metal hydroxide, preferably sodium hydroxide, remaining in the reaction mixture after saponification of the polymeric acetal carboxylate ester precursor with excess aqueous alkali metal hydroxide is adequate for the reaction with carbon dioxide, without further addition of alkali metal hydroxide. In this manner storage stable polymeric acetal carboxylate compositions are provided making use of at least a portion of the excess alkali metal hydroxide used for saponification which usually is discarded or reconcentrated for recycle in the prior process described in US—A—4,140,676.

The presence of alkali metal hydroxides alone in admixture with the polymer is not suitable for preparing useful storage stable compositions because at effective levels it results in excessively high product alkalinity which makes the material significantly more hazardous for use in consumer products. In precipitating the saponification product with water/alkanol mixtures most of the excess alkali metal hydroxide remains in solution in the liquid phase and does not coprecipitate with the polymeric acetal carboxylate.

The storage stable products made in accordance with the present invention should be alkaline. The preferred range of pH (measured as 0.6% aqueous solution) is about 9.5 to 11.0, with the range 10.0-10.8 particularly preferred. The intimate admixture of alkali metal carbonate and polymer formed in the present process can be efficiently precipitated from an aqueous medium in the presence of a sufficient amount of alkanol, preferably methanol, which is highly advantageous for product recovery since alkanol is formed in the saponification of the polymeric acetal carboxylate ester precursor in the process for producing the alkali metal salt of the polymer having sequestering and detergent builder properties.

Where it is desired to recover the product from aqueous solution without employing precipitating

solvents, the amounts of alkali metal hydroxide and carbon dioxide employed must be sufficient to provide an intimate admixture of at least 1% by weight, preferably at least 3% by weight of alkali metal carbonate. Any excess alkali metal hydroxide can be further neutralized by the reaction of carbon dioxide, since the presence of excess alkali metal carbonate is not detrimental and is often advantageous, and the intimate admixture can be recovered via evaporation.

It is preferred to recover the admixture by precipitation. The precipitated admixture can be separated using conventional processes such as filtration, settling, centrifugation, etc. The resulting moist solids can be washed, if desired, and dried by any number of methods such as flash-drying, tray drying in an oven or at ambient temperature, rotary drying, etc. The dried solids can be crushed, screened, milled, etc. Such finishing procedures can be used without destroying the stabilizing effect of the alkali metal carbonate, provided that the polymer and alkali metal carbonate remain in intimate admixture and the admixture is not subjected to excessive acidic conditions.

The degradation of a polymeric acetal carboxylate under conditions of elevated temperatures occurring during shipping and storage in warm climates was evaluated using the following procedure.

A 0.6 gram sample of the product was stored in a tightly closed 4 ounce (0.12 $dm^3$) glass bottle and maintained at 49°C for a period of 2-6 weeks. The amount of final sequestration activity or polymer content of the product was determined at the end of the exposure period. For the most accurate determination of storage stability, an exposure time of 4-6 weeks is preferred. The sequestration activity or polymer content of the product can be determined by measurement of its calcium sequestration capacity or by measurement of its polymer content by means of high performance liquid chromatography. Similar results are obtained by either method. The calcium sequestration method requires less elaborate equipment and the following method can be used with good results.

A sample of the product is dissolved in deionized water to form a solution slightly more concentrated than 0.6% by weight, adjusted to pH 10.0 with 1 normal NaOH or HCl, and diluted to exactly 0.600% with deionized water. A portion of this solution is charged to the reservoir of an automatic titrator equipped with a calcium selective electrode. Exactly 100 mls of $10^{-3}$ M $CaCl_2$ solution, adjusted to pH 10.0 with 1 normal NaOH, is titrated with the sample solution with stirring at a titrant feed rate of 2 ml/minute. Titration is continued until well past the equivalence point of a titration curve on the recorder chart of the titrator, usually 10 ml or less of titrant. The titration is repeated using a sample of standard sodium tripolyphosphate (STPP) in place of the product sample. For each of the two titrations, the equivalence point is determined graphically, and the number of ml of titrant required to reach the equivalence point is measured. The calcium sequestration activity of the product sample is then calculated as follows:

$$\text{\% of STPP} = \frac{\text{ml STPP solution to equiv. pt}}{\text{ml product solution to equiv pt.}} \times 100$$

The initial activity was determined for an otherwise identical sample which had not been exposed to ageing at 49°C. The percentage loss of activity per week of exposure was then calculated as follows:

$$L = \frac{A_i - A_f}{A_i} \times \frac{100\%}{N}$$

where: $A_i$ is the initial activity
$A_f$ is the final activity
N is the number of weeks exposure
L is the rate of activity loss (% per week).

The improved compositions of this invention, when tested for stability as described above, lose calcium sequestration capacity at a rate not exceeding about 5% per week. In the most preferred embodiments of this invention the rate of loss of calcium sequestration capacity does not exceed about 2% per week. The percentages referred to are percentages of the initial calcium sequestration capacity of the product. Thus, a loss of 100% represents total loss of the original calcium sequestration capacity.

The invention is further illustrated by the following Examples wherein all parts and percentages are by weight, unless otherwise indicated.

## Example 1

This Example illustrates the degradation of the sequestration activity of the polymeric acetal carboxylates in the absence of a basic additive.

A batch of polymeric acetal carboxylate sodium salt having an average structure

$$-\!\!\left[\underset{\displaystyle COONa}{\overset{|}{CHO}}\right]\!\!-_{103}$$

with chain ends stabilized by addition of ethyl vinyl ether was prepared generally as taught by

US—A—4,225,685. Freshly distilled methyl glyoxylate in methylene chloride is polymerized using triethyl amine initiator to form the ester polymer which is endcapped using ethyl vinyl ether in the presence of an organoaluminum endcapping catalyst and saponified with excess sodium hydroxide. The polymer product is precipitated using methanol and filtered and dried. The pH of the product was about 9.9 and the initial calcium sequestration capacity was 143% of STPP. Two samples of this material were evaluated using the above described procedure to determine storage stability. One sample was exposed for two weeks and its average rate of calcium sequestration activity loss was about 15% per week and the other sample was exposed for five weeks and its activity loss averaged 20% per week.

Example 2

A sample of the polymeric acetal carboxylate prepared in accordance with Example 1 weighing 30g was mixed with 3.6g sodium hydroxide, 58.6g $H_2O$ and 9.0g methanol to form a slurry which was heated to 70°C. With stirring gaseous carbon dioxide was added to the slurry to convert a substantial portion of the sodium hydroxide to sodium carbonate. Approximately 53g of methanol was added to reduce the solubility of the polymer and the sodium carbonate. The slurry was cooled and filtered to recover the solids, washed with a solution of 0.2% sodium hydroxide in methanol and dried. The pH of a 0.6% aqueous solution of the product was 9.72 and the product contained 5.24% sodium carbonate. A sample of this admixture was evaluated for storage stability as above. The average rate of calcium sequestration activity loss was about 0.35% per week.

Example 3

This Example illustrates the degradation of sequestration activity of the polymeric acetal carboxylates when mixed with the basic additive by dry mixing.

A sample of the polymeric acetal carboxylate of Example 1 in powder form and dry sodium carbonate powder were mixed and vigorously shaken in a closed glass veseel for thirty minutes to produce a uniform product containing 5.0% sodium carbonate. The pH of a 0.6% aqueous solution of the product was 10.10. A sample of this material was evaluated for storage stability as above. The average rate of calcium sequestration activity loss was about 19.5% per week demonstrating that the basic additive is not effective when mixed with the polymer in the dry state. The following Examples illustrate the unexpected advantages of the prsent invention.

Example 4

This Example illustrates the preparation of an intimate admixture of the polymer and basic additive by mixing the additive with the aqueous base used for saponification of the ester precursor.

A batch of polymeric acetal carboxylate was prepared as described in Example 1 except sodium carbonate was added to the aqueous sodium hydroxide used to saponify the polymeric ester and the methanol generated by the saponification reaction was sufficient to complete the precipitation of the polymer product. The polymer product was filtered and dried. The pH of a 0.6% aqueous solution of the product was 10.01. The recovered product contained 3.0% sodium carbonate. A sample of this admixture was evaluated for storage stability as above. The average rate of calcium sequestration activity loss was about 1.4% per week.

Example 5

Another batch of polymeric acetal carboxylate was prepared using the procedure of Example 4. The recovered product contained 2.92% sodium carbonate and a 0.6% aqueous solution of this admixture had a pH of 10.22. The average rate of calcium sequestration activity loss was about 0.35% per week.

Example 6

This Example illustrates the preparation of an intimate admixture by mixing the basic additive and polymeric acetal carboxylate in solution.

A batch of polymeric acetal carboxylate salt was prepared as described in Example 1. Sodium carbonate was added to the polymer dissolved in hot water. The solution of the product was then evaporated to dryness and milled to produce in particulate form an intimate admixture of the polymer containing 3.1% sodium carbonate. The admixture was evaluated for storage stability as above. The average rate of calcium sequestration activity loss was about 4.0% per week.

Example 7

This Example illustrates the effectiveness of several different basic additives in the preparation of the intimate admixture of the invention.

A batch of polymeric acetal carboxylate salt was prepared as described in Example 1 and the resulting product had an average structure

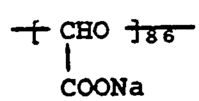

with chain ends stabilized by addition of ethyl vinyl ether. One sample of this material, in dry powder form, was used as a control for stability testing. Other samples were prepared by mixing 30 parts of the material with a solution containing 1.5 parts NaOH, 9.0 parts $CH_3OH$ and 56.5 parts $H_2O$, adding a basic additive to the slurry and stirring the mixture for one hour at 55°C. The mixture was cooled to 45°C and more methanol was added to complete the precipitation of the product. The solids were recovered by filtration and drying, and the product was evaluated for storage stability as described previously. Results are presented in the following table I.

TABLE I

| Basic Additive | % of Product | Product pH | %Act.Loss/Wk. |
|---|---|---|---|
| None | 0 | 9.66 | 22.2 |
| $Na_2CO_3$ | 3.2 | 10.05 | 1.77 |
| $Na_2B_2O_4$ | 3.0 | 9.97 | 0.31 |
| $Na_2SiO_3$ | 7.1 | 10.30 | 0.79 |
| $Na_3PO_4$ | 4.2 | 10.34 | 1.22 |
| $Na_5P_3O_{10}$ | 4.3 | 10.17 | 0.93 |

Example 8

A batch of polymeric acetal carboxylate methyl ester precursor with the backbone structure

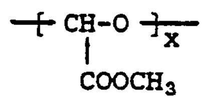

dissolved in methylene chloride, was prepared in accordance with the procedure of Example 1. A sample of this material containing abut 90g of polymer was saponified with excess aqueous NaOH (53g NaOH, 194g $H_2O$) at 55°-65°C, the methylene chloride being boiled off. The resulting polymer had an average structure

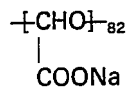

with chain ends stabilized by addition of ethyl vinyl ether. Gaseous carbon dioxide was added with stirring converting a substantial portion of the excess sodium hydroxide to sodium carbonate. Methanol was then added to reduce the solubility of both the polymer and the sodium carbonate. The solids were recovered by filtration, washed with methanol saturated with sodium carbonate, and dried. The product contained 6.5% sodium carbonate, and the pH of a 0.6% aqueous solution of the product was 10.26. A sample of this product was evaluated for storage stability and demonstrated an average rate of calcium sequestration activity loss of about 0.18% per week.

This procedure was repeated except that the product was not washed with methanol saturated with sodium carbonate prior to drying. For this product, the sodium carbonate content was 6.2%, the product pH was 10.40 and the activity loss was about 0.18% per week

Examples 9—14

Following the procedure of Example 2 a number of slurries were prepared each containing 30g of the polymeric acetal carboxylate, and various amounts of NaOH, methanol, and water. The mixtures were heated to drive off most of the methanol and dissolve the solids. These samples were cooled to 65°-70°C and gaseous carbon dioxide was then added to generate $Na_2CO_3$ in situ. The product was precipitated with methanol, filtered, washed with basic methanol and dried. The pH of a 0.6% aqueous solution of the product was determined and the admixture was evaluated for storage stability as above. The results are set forth in Table II.

TABLE II

| Example No. | 9 | 10 | 11 | 12 | 13 | 14 |
|---|---|---|---|---|---|---|
| Wt. NaOH(g) | 5.0 | 5.0 | 5.0 | 3.55 | 3.2 | 3.2 |
| Mixture State at $CO_2$ addition | solu. | solu. | solu. | slur. | slur. | slur. |
| % $Na_2CO_3$ in Product | 3.39 | 4.18 | 5.86 | 4.91 | 4.63 | 3.38 |
| Product pH | 10.32 | 10.25 | 10.50 | 10.42 | 10.11 | 10.14 |
| Activity Loss Avg./wk.(%) | 1.21 | 0.39 | 2.01 | 2.27 | 0.36 | 0.54 |

Examples 15—19

Following the general procedure of Examples 4—6, a number of runs were made to produce an intimate admixture of sodium carbonate and polymeric acetal carboxylate sodium salt. Conditions of preparation and starting materials varied. The results shown in Table III below, further illustrate the superior storage stability of the compositions prepared in accordance with this invention.

TABLE III

| Example | Product pH | % wt $Na_2CO_3$ | % Activity Loss/Wk |
|---|---|---|---|
| 15 | 9.78 | 1.81 | 1.32 |
| 16 | 10.11 | 3.0 | 0.17 |
| 17 | 10.03 | 4.0 | 1.05 |
| 18 | 10.12 | 3.3 | 0.98 |
| 19 | 10.65 | 2.41 | 1.58 |

Although the invention has been described in terms of specified embodiments which are set forth in considerable detail, it should be understood that this is by way of illustration only.

**Claims**

1. A composition in solid form which comprises a water soluble polymeric acetal carboxylate having the empirical formula:

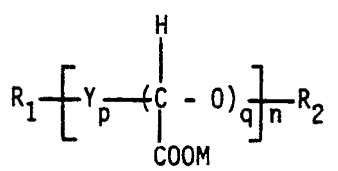

wherein Y is one or more comonomers randomly distributed in the polymer; n averages at least 4; p is 0 to an average of about 5; q is at least 1; $R_1$ and $R_2$ are individually any chemically stable group which stabilizes the polymer such that in an aqueous solution of 0.5 molar sodium hydroxide containing 10 grams per litre of the polymeric acetal carboxylate, the average chain length of the polymer is reduced by not more than 50 per cent as determined by Proton Magnetic Resonance after one hour at 20°C; and M is selected from alkali metal, ammonium, tetralkyl ammonium and alkanol ammonium groups having from 1 to 4 carbon atoms in the alkyl or alkanol chains, in intimate admixture with a stabilizing amount of a basic additive, said intimate admixture having been obtained by mixing the polymeric acetal carboxylate with the basic additive under conditions in which at least one of the polymeric acetal carboxylate and the basic additive is in the form of a solution or slurry, and recovering the composition in solid form, the basic additive and the stabilizing amount thereof being such that a 0.6% aqueous solution of the admixture has a pH in the range 9.5 to 11.0

2. The composition of Claim 1 wherein q is 1, and polyacetal carboxylate segments having the structure

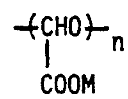

constitute at least 50% of the total polymer, said composition having an average rate of calcium sequestration activity loss not exceeding 5% per week at 49°C.

3. The composition of either of Claims 1 and 2 wherein p is 0, q is 1 and M is an alkali metal.

4. The composition of Claim 3 wherein M is sodium or potassium.

5. The composition of any of Claims 1 to 4 wherein the basic additive is selected from alkali metal carbonates, alkali metal orthophosphates, alkali metal polyphosphates, alkali metal silicates, alkali metal borates and mixtures thereof.

6. The composition of any of Claims 1 to 4 wherein the basic additive is an alkali metal carbonate.

7. The composition of Claim 6 wherein the basic additive is sodium carbonate.

8. The composition of Claim 7 wherein the amount of sodium carbonate is from 1 to 15% by weight of the admixture.

9. The composition of any of Claims 1 to 8 wherein at least one of $R_1$ and $R_2$ is derived from ethyl vinyl ether.

10. The composition of any of Claims 1 to 9 wherein n averages in the range 20 to 200.

11. The composition of Claim 10 wherein n averages in the range 50 to 150.

12. The composition of any of Claims 1 to 11 wherein the admixture forms at least 90% by weight of the composition.

13. A process for producing a polymeric acetal carboxylate composition as defined in Claim 1 which comprises mixing an effective amount of a basic additive with the polymeric acetal carboxylate under conditions in which at least one of the basic additive and the polymeric acetal carboxylate is in the form of a solution or slurry, and recovering an intimate admixture of the additive and the polymeric acetal carboxylate in solid form.

14. The process of Claim 13 for producing a composition as defined in any of Claims 2 to 12.

15. The process of either of Claims 13 and 14 wherein a solution of the basic additive is mixed with the polymeric acetal carboxylate.

16. The process of any of Claims 13 to 15 wherein the basic additive is sodium carbonate.

17. The process of Claim 16 wherein sodium carbonate is mixed with a slurry of the polymeric acetal carboxylate in a methanol/water mixture.

18. A process for the production of a composition as defined in Claim 6 which comprises reacting an aqueous solution or slurry of the polymeric acetal carboxylate and alkali metal hydroxide with carbon dioxide to form alkali metal carbonate in intimate admixture with the polymeric acetal carboxylate.

19. A process for producing a composition as defined in Claim 6, which comprises saponifying a polymeric acetal carboxylate ester with excess aqueous alkali metal hydroxide to form the alkali metal salt of the polymeric acetal carboxylate, and reacting the resultant reaction mixture with carbon dioxide to form alkali metal carbonate in intimate admixture with the alkali metal salt of the polymeric acetal carboxylate.

20. The process of Claim 19 wherein the reaction is conducted at a temperature in the range 20° to 75°.

21. The process of either of Claims 19 and 20 in which the admixture is recovered in solid form by adding methanol to the reaction mixture to precipitate the admixture and drying the admixture to a final volatile content in the range 8 to 14 percent by weight.

22. The process of Claim 21 wherein the dried admixture produced is such that the average rate of loss of its calcium sequestration activity is not in excess of 2% per week at 49°C.

**Patentansprüche**

1. Masse in fester Form, enthaltend ein wasserlösliches Acetalcarboxylatpolymer der Strukturformel:

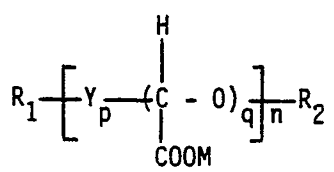

von mindestens 4, p 0 bis zu einem Durchschnittswert von etwa 5, q mindestens 1, und $R_1$ und $R_2$ jeweils irgendeine chemisch stabile Gruppe Bedeuten, welche das Polymer solchermaßen stabilisiert, daß die durchschnittliche Kettenlänge des Polymers nach einer Stunde bei 20°C in einer wässrigen 0.5 molaren Natriumhydroxidlösung, die 10 g pro Liter Acetalcarboxylatpolymer enthält, sich um nicht mehr als 50%, bestimmt durch magnetische Protonenresonanzspektroskopie, vermindert, und worin M aus Alkalimetall-, Ammonium-, Tetraalkylammonium-, und Alkanolammoniumgruppen mit 1 bis 4 Kohlenstoffatomen in den Alkyl- oder Alkanolketten ausgewählt ist, in einem innigen Gemisch mit einer stabilisierenden Menge eines basischen Zusatzstoffes, wobei das innige Gemisch durch Vermischen des Acetalcarboxylatpolymers mit dem basischen Zusatzstoff unter Bedingungen, bei denen mindestens ein Vertreter der Gruppe Acetalcarboxylatpolymer und basischer Zusatzstoff in Form einer Lösung oder einer Aufschlämmung vorliegt, und durch Wiedergewinnung der Masse in fester Form erhalten worden ist, wobei der basische Zusatzstoff und dessen stabilisierende Menge solchermaßen gewählt sind, daß eine 0,6 % ige wässrige Lösung des Gemisches einen pH-Wert im Bereich von 9,5 bis 11.0 aufweist.

2. Masse nach Anpruch 1, dadurch gekennzeichnet, daß q 1 bedeutet, und die Polyacetalcarboxylatschnitte mit der Struktur

$$-\!\left(\underset{\underset{COOM}{|}}{C}HO\right)\!-_n$$

sich mindestens 50 Gew, % des Gesamtpolymers bilden, wobei die Masse eine durchschnittliche Verlustrate an Calciumsequestrationsaktivität von nicht mehr als 5% pro Woche bei 49°C aufweist.

3. Masse nach einem der Ansprüche 1 und 2, dadurch gekennzeichnet, daß p O, q 1 und M ein Alkalimetall bedeuten.

4. Masse nach Ansprüch 3, dadurch gekennzeichnet, daß M Natrium oder Kalium bedeutet.

5. Masse nach einem der Ansprüche 1 bis 4, dadurch gekennzeichnet, daß der basische Zusatzstoff aus Alkalimetallcarbonaten, Alkalimetallorthophosphaten, Alkalimetallpolyphosphaten, Alkalimetallsilikaten, Alkalimetallboraten und aus Germischen davon ausgewählt ist.

6. Masse nach einem der Ansprüche 1 bis 4, dadurch gekennzeichnet, daß der basische Zusatzstoff ein Alkalimetallcarbonat ist.

7. Masse nach Anspruch 6, dadurch gekennzeichnet, daß der basische Zusatzstoff Natriumcarbonat ist.

8. Masse nach Ansprüch 7, dadurch gekennzeichnet, daß die Menge an Natriumcarbonat 1 bis 15 Gew-% bezogen auf das Gemisch, beträgt.

9. Masse nach einem der Ansprüche 1 bis 8, dadurch gekennzeichnet, daß mindestens eine der Gruppen $R_1$ und $R_2$ von Ethylvinylether abgeleitet ist.

10. Masse nach einem der Ansprüche 1 bis 9, dadurch gekennzeichnet, daß der Durchschnittswert von n in dem Bereich von 20 bis 200 liegt.

11. Masse nach Ansprüch 10, dadurch gekennzeichnet, daß der Durchschnittswert von n in dem Bereich von 50 bis 150 liegt.

12. Masse nach einem der Ansprüche 1 bis 11, dadurch gekennzeichnet, daß das Gemisch mindestens 90 Gew-% Masse ausmacht.

13. Verfahren zur Herstellung einer Acetalcarboxylatpolymermasse nach Anspruch 1, dadurch gekennzeichnet, daß man eine wirksame Menge eines basischen Zusatzstoffes mit dem Acetalcarboxylatpolymer unter Bedingungen, bei denen mindestens ein Vertreter der Gruppe basischer Zusatzstoff und Acetalcarboxylatpolymer in Form einer Lösung oder Aufschlämmung vorliegt, vermischt und das innige Gemisch aus Zusatzstoff und Acetalcarboxylatpolymer in fester Form, wiederge winnt.

14. Verfahren nach Anspruch 13 zur Herstellung einer Masse nach einem der Ansprüche 2 bis 12.

15. Verfahren nach einem der Ansprüche 13 und 14, dadurch gekennzeichnet, daß man die Lösung des basischen Zusatzstoffes mit dem Acetalcarboxylatpolymer mischt.

16. Verfahren nach einem der Ansprüche 13 und 15, dadurch gekennzeichnet, daß der basische Zusatzstoff Natriumcarbonat ist.

17. Verfahren nach Anspruch 16, dadurch gekennzeichnet, daß man Natriumcarbonat mit der Aufschlämmung des Acetalcarboxylatpolymers in einem Methanol/Wassergemisch vermischt.

18. Verfahren zur Herstellung einer Masse nach Anspruch 6, dadurch gekennzeichnet, daß man eine wässrige Lösung oder Aufschlämmung aus Acetalcarboxylatpolymer und Alkalimetallhydroxid mit Kohlendioxid zur Bildung eines Alkalimetallcarbonats zu einem innigen Gemisch mit dem Acetalcarboxylatpolymeren reagieren läßt.

19. Verfahren zur Herstellung einer Masse nach Anspruch 6, dadurch gekennzeichnet, daß man einen Ester des acetalcarboxylatpolymers mit einem Überschuß an wässrigem Alkalimetallhydroxid zur Bildung eines Alkalimetallsalzes des Acetalcarboxylatpolymers verseift, und das entstandene Reaktionsgemisch mit Kohlendioxid zur Bildung eines Alkalimetallcarbonats zu einem innigen Gemisch mit dem Alkalimetallsalz des Acetalcarboxylatpolymers reagieren läßt,

20. Verfahren nach Ansprüch 19, dadurch gekennzeichnet, daß man die Reaktion bei einer Temperatur in dem bereich von 20° bis 75° durchführt.

21. Verfahren nach einem der Ansprüche 19 und 20, dadurch gekennzeichnet, daß man das Gemisch durch Zugabe von Methanol zu dem Reaktionsgemisch zur Fällung des Gemisches und Trocknen des Gemisches bis zu einem Restgehalt an flüchtigen Bestandteilen im Bereich von 8 bis 14 Gew. % in fester Form wiedergewinnt.

22. Verfahren nach Ansprüch 21, dadurch gekennzeichnet, daß man das getrocknete Gemisch solchermaßen herstellt, daß die durchschnittliche Verlustrate seiner Kalziumsequestrationsaktivität nicht mehr als 2% pro Woche bei 49°C beträgt.

## Revendications

1. Composition sous forme solide, qui comprend un acétal carboxylate polymère soluble dans l'eau répondant à la formule brute:

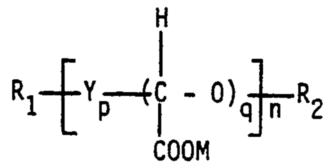

dans laquelle Y est un ou plusieurs comonomères répartis au hasard dans le polymère; n est en moyenne d'au moins 4; p est 0 à une moyenne d'eviron 5; q est au moins égal à 1; $R_1$ et $R_2$ sont individuellement n'importe quel groupe chimiquement stable qui stabilise le polymère de telle sorte que dans une solution aqueuse d'hydroxyde de sodium 0,5 M contenant 10 grammes par litre de l'acétal carboxylate polymère, la longueur de chaîne moyenne du polymère, déterminée par résonance magnétique protonique au bout d'une heure à 20°C, ne soit pas réduite de plus de 50 % et M est choisi parmi un métal alcalin, l'ammonium, des groupes tétralkylammonium et alcanolammonium ayant de 1 à 4 atomes de carbone dans les chaînes alkyle et alcanol, en mélange intime avec une quantité stabilisante d'un additif basique, ce mélange intime ayant été obtenu en mélangeant l'acétal carboxylate polymère avec l'additif basique dans des conditions dans lesquelles l'acétal-carboxylate polymère et/ou l'additif basique sont sous la forme d'une solution ou d'une bouillie, et en récupérant la composition sous forme solide, l'additif basique et la quantité stabilisante de celui-ci étant tels qu'une solution aqueuse à O,6 % du mélange ait un pH dans l'intervalle de 9,5 à 11.0.

2. Composition selon la revendication 1, dans laquelle q est égal à 1, et des segments polyacétal carboxylate répondant à la formule:

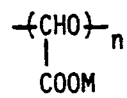

constituent au moins 50 % en poids du polymère total, cette composition ayant une vitesse moyenne de perte de l'activité de séquestration du calcium ne dépassant pas 5 % par semaine à 49°C.

3. Composition selon l'une quelconque des revendications 1 et 2, dans laquelle p est égal à 0, q est égal à 1 et M est un métal alcalin.

4. Composition selon la revendication 3, dans laquelle M est le sodium ou le potassium.

5. Composition selon l'une quelconque des revendications 1 à 4, dans laquelle l'additif basique est choisi parmi des carbonates de métaux alcalins, des orthophosphates de métaux alcalins, des polyphospates de métaux alcalins, des silicates de métaux alcalins, des borates de métaux alcalins et des mélanges de ceux-ci.

6. Composition selon l'une quelconque des revendications 1 à 4, dans laquelle l'additif basique est un carbonate de métal alcalin.

7. Composition selon la revendication 6, dans laquelle l'additif basique est du carbonate de sodium.

8. Composition selon la revendication 7, dans laquelle la quantité de carbonate de sodium est de 1 à 15 % en poids du mélange.

9. Composition selon l'une quelconque des revendications 1 à 8, dans laquelle au moins un des symboles $R_1$ et $R_2$ dérive de l'éther éthylvinylique.

10. Composition selon l'une quelconque des revendications 1 à 9, dans laquelle n est en moyenne dans l'intervalle de 20 à 200.

11. Composition selon la revendication 10, dans laquelle n est en moyenne dans l'intervalle de 50 à 150.

12. Composition selon l'une quelconque des revendications 1 à 11, dans laquelle le mélange forme au moins 90 % en poids de la composition.

13. Procédé de préparation d'une composition d'acétal carboxylate polymère tel que définie dans la revendication 1, quie comprend le mélange d'une quantité efficace d'un additif basique avec l'acétal carboxylate polymère dans des conditions dans lesquelles l'additif basique et/ou l'acétal carboxylate polymère sont sous la forme d'une solution ou d'une bouillie, et la récupération d'un mélange intime de l'additif et de l'acétal carboxylate polymère sous forme solide.

14. Procédé selon la revendication 13 pour produire une composition telle que définie dans l'une quelconque des revendications 2 à 12.

15. Procédé selon l'une quelconque des revendications 13 et 14, dans lequel une solution de l'additif basique est mélangée à l'acétal carboxylate polymère.

16. Procédé selon l'une quelconque des revendications 13 à 15, dans lequel l'additif basique est le carbonate de sodium.

17. Procédé selon la revendication 16, dans lequel du carbonate de sodium est mélangé avec une bouillie de l'acétal carboxylate polymère dans un mélange méthanol/eau.

18. Procédé de préparation d'une composition telle que définie dans la revendication 6, qui comprend la réaction d'une solution ou d'une bouillie aqueuse de l'acétal carboxylate polymère et d'un hydroxyde de métal alcalin avec du gaz carbonique pour former un carbonate de métal alcalin en mélange intime avec l'acétal carboxylate polymère.

19. Procédé de préparation d'une composition telle que définie dans la revendication 6, qui comprend la saponification d'un acétal-ester carboxylique polymère avec un hydroxyde de métal alcalin aqueux en excès pour former le sel de métal alcalin de l'acétal carboxylate polymère et la réaction du mélange réactionnel obtenu avec du gaz carbonique pour former un carbonate de métal alcalin en mélange intime avec le sel de métal alcalin de l'acétal carboxylate polymère.

20. Procédé selon la revendication 19, dans lequel la réaction est effectuée à une température dans l'intervalle de 20 à 75°C.

21. Procédé selon l'une quelconque des revendications 19 et 20, dans lequel le mélange est récupéré sous forme solide en ajoutant du méthanol au mélange réactionnel pour préparer le mélange et en séchant le mélange jusqu'à une teneur finale en matières volatiles dans l'intervalle de 8 à 14 % en poids.

22. Procédé selon la revendication 21, dans lequel le mélange séche préparé est tel que la vitesse moyenne de perte de son activité de séquestration du calcium ne dépasse pas 2 % par semaine à 49°C.